Europäisches Patentamt

European Patent Office

Office européen des brevets

(11) Veröffentlichungsnummer: **0 297 423**
**A2**

(19)

(12) **EUROPÄISCHE PATENTANMELDUNG**

(21) Anmeldenummer: 88109971.7

(22) Anmeldetag: 23.06.88

(51) Int. Cl.⁴: **C08L 67/02 , C08J 5/18 ,**
**//(C08L67/02,67:00)**

(30) Priorität: 30.06.87 US 68484

(43) Veröffentlichungstag der Anmeldung:
**04.01.89 Patentblatt 89/01**

(84) Benannte Vertragsstaaten:
**BE DE FR GB IT LU NL**

(71) Anmelder: **HOECHST CELANESE**
**CORPORATION**
**Route 202-206 North**
**Somerville, N.J. 08876(US)**

(72) Erfinder: **Rogers, John H.**
**103 Mylon Ray Hopkins Court**
**Greenville South Carolina 29607(US)**

(74) Vertreter: **Güthlein, Paul, Dr. et al**
**KALLE Niederlassung der Hoechst AG**
**Patentabteilung Postfach 3540**
**Rheingaustrasse 190**
**D-6200 Wiesbaden 1(DE)**

(54) Polyesterformmasse mit verbesserten Verarbeitungseigenschaften.

(57) Es wird eine thermoplastische Polyesterformmasse beschrieben, die verbesserte Verarbeitungseigenschaften besitzt, wobei hierunter insbesondere eine verbesserte Laufsicherheit bei der Folienherstellung verstanden werden soll. Die Formmasse enthält erfindungsgemäß neben einem Polyester noch einen Copolyesterether, der wenigstens die folgenden Komponenten enthält:

A) als Dicarbonsäurekomponente eine 1,4-Cyclohexandicarbonsäure mit einem Anteil an trans-Isomeren von wenigstens 70 %;

B) als Glykolkomponente
i) 1,4-Cyclohexandimethanol und
ii) Polytetramethylenetherglykol mit einem mittleren Molekulargewicht im Bereich von 500 bis 1 100 in einer Menge von 15 bis 50 Gew.-%, bezogen auf das Gesamtgewicht des Copolyesterethers;

C) als zusätzliche Komponente ein Verzweigungen hervorrufendes Monomeres mit mindestens drei funktionellen Carboxyl- oder Hydroxylgruppen und mit einer Anzahl von Kohlenstoffatomen im Bereich von 3 bis 60 in einer Menge von 0,1 bis 1,5 Mol-%, bezogen auf die gesamte Molmenge der Dicarbonsäurekomponente oder der Glykolkomponente. Die Menge des Copolyesterethers soll erfindungsgemäß so bemessen sein, daß die Häufigkeit von Folienabrissen während der Herstellung von Folien aus der Formmasse reduziert wird.

EP 0 297 423 A2

EP 0 297 423 A2

## Polyesterformmasse mit verbesserten Verarbeitungseigenschaften

Die vorliegende Erfindung betrifft eine Polyesterformmasse, die bei der Herstellung von biaxial orientierten Polyesterfolien aus dieser Polyesterformmasse verbesserte Verarbeitungseigenschaften aufweist. Die erfindungsgemäße Polyesterformmasse enthält einen Copolyesterether auf Basis von 1,4-Cyclohexandimethanol.

Die Herstellung einer Folie aus Polyester erfolgt typischerweise durch Extrudieren einer Polyesterschmelze durch eine Breitschlitzdüse auf eine Kühltrommel, wo die Schmelze schnell abgekühlt wird und sich eine weitgehend amorphe (nicht-kristalline) Folie ausbildet. Diese amorphe Polyesterfolie wird anschließend zur Verfestigung bei erhöhter Temperatur biaxial gestreckt. Dabei wird im allgemeinen zunächst in Längsrichtung gestreckt und so eine monoaxial gestreckte Folie erhalten. Danach erfolgt die Streckung in Querrichtung. Abschließend wird die biaxial gestreckte Folie unter Formbegrenzung einer Wärmebehandlung unterworfen (hitzefixiert), um ihre Kristallisation zu bewirken. Eine genaue Beschreibung des Verfahrens ist in US-A-2 823 421 enthalten.

Ein Problem, das die Wirtschaftlichkeit der Polyesterfolienproduktion ernsthaft beeinträchtigt, besteht in häufigem, in unregelmäßigen Abständen vorkommendem Auftreten von Folieneinrissen während der Querstreckung. Die Häufigkeit solcher Einrisse hängt von mehreren Faktoren ab, z. B. von

1.) der chemischen Zusammensetzung des Polyesters,
2.) einer zu geringen Schmelzviskosität des Polymeren (d. h. geringes mittleres Molekulargewicht),
3.) der Foliendicke und
4.) den Verarbeitungsbedingungen wie Temperatur, Streckverhältnis oder Streckgeschwindigkeit.

Eine Möglichkeit, das Problem häufiger Folieneinrisse zu lösen, besteht darin, das mittlere Molekulargewicht des Polyesters, für das die Grenzviskosität ein Maß ist, zu erhöhen. Beispielsweise führt eine Erhöhung der Grenzviskosität des Polyesters von 0,65 dl/g auf 0,85 dl/g zu einer deutlichen Abnahme von Folieneinrissen. Doch ist diese Maßnahme kostenaufwendig und kann zu anderen Schwierigkeiten bei der Verarbeitung führen, denn höhermolekulare Harze erfordern unerwünschte höhere Drucke bei der Extrusion.

Copolyesterether sind als solche bekannt. In US-A-4 349 469 werden elastomere Copolyesterether auf Basis von Poly-1,4-cyclohexandimethylen-1,4-cyclohexandicarboxylat, das mit Polytetramethylenetherglykol modifiziert ist, beschrieben. Schmelzen aus so hergestellten Copolyesterethern zeigen gute Festigkeitswerte und können in einem Extrusionsblasverfahren zu transparenten Kunststoffsäcken oder -folien geformt werden. Die jüngere US-A-4 636 442 beschreibt die Coextrusion von Schichten aus einem derartigen Copolyesterether und aus Polyethylenterephthalat zur Herstellung einer biaxial orientierten Folie mit ausgezeichneter Knickfestigkeit. Aus der US-A-4 604 446 ist ein sulfonierter Copolyesterether bekannt, mit dessen Hilfe Verbunde aus Polyester und Polyvinylalkohol oder Copolymeren enthaltend Polyvinylalkohol hergestellt werden können. Die Verbunde sind besonders geeignet für die Produktion von Getränkeflaschen.

In US-A-3 733 909 ist ein Copolymeres aus Polyethylenterephthalat und Copolyesterether beschrieben, und US-A-3 907 926 ($\hat{=}$ DE-B-2 460 257) beschreibt Mischungen (blends) aus Polybutylenterephthalat und Copolyesterethern.

Die Aufgabe der vorliegenden Erfindung bestand darin, eine Polyesterformmasse zu schaffen, die eine verbesserte Verarbeitbarkeit aufweist, die insbesondere zu biaxial streckorientierten Folien verarbeitet werden kann, wobei eine verringerte Gefahr des Auftretens von Folieneinrissen bei der Querstreckung angestrebt ist. Ferner sollen die aus den zu schaffenden Polyesterformmassen hergestellten Folien eine verbesserte Biegebruchfestigkeit aufweisen.

Gelöst wird diese Aufgabe durch eine thermoplastische Polyesterformmasse der eingangs genannten Art, die dadurch gekennzeichnet ist, daß sie neben einem Polyester einen Copolyesterether enthält, wobei der Copolyesterether wenigstens die folgenden Komponenten enthält:

A) als Dicarbonsäurekomponente eine 1,4-Cyclohexandicarbonsäure mit einem Anteil an trans-Isomeren von wenigstens 70%;

B) als Glykolkomponente
   i) 1,4-Cyclohexandimethanol und
   ii) Polytetramethylenetherglykol mit einem mittleren Molekulargewicht im Bereich von 500 bis 1 100 in einer Menge von l5 bis 50 Gew.-%, bezogen auf das Gesamtgewicht des Copolyesterethers;

C) als zusätzliche Komponente ein Verzweigungen hervorrufendes Monomeres mit mindestens drei funktionellen Carboxyl- oder Hydroxylgruppen und mit einer Anzahl von Kohlenstoffatomen im Bereich von 3 bis 60 in einer Menge von 0,1 bis 1,5 Mol-%, bezogen auf die gesamte Molmenge der Dicarbonsäurekomponente oder der Glykolkomponente, wobei der Copolyesterether innerhalb der Polyesterformmasse in

2

einer Menge anwesend ist, die ausreicht, um bei der Herstellung von biaxial streckorientierten Folien aus der Polyesterformmasse die Häufigkeit von Folienabrissen wirkungsvoll zu reduzieren, bevorzugt in einer Menge von nicht mehr als 7 Gew.-%, bezogen auf das Gesamtgewicht der Polyesterformmasse.

Es wurde gefunden, daß die Gefahr von Filmeinrissen während der Querstreckung von Polyesterfolien durch Zusatz einer wirksamen Menge eines bestimmten Copolyesterethers bedeutend gesenkt oder sogar völlig ausgeschaltet werden kann. Dabei hat sich gezeigt, daß die Häufigkeit der Filmeinrisse durch Zugabe von weniger als 1,5 Gew.-% an Copolyesterether nur unerheblich abnimmt, während bei Zu gabe von mehr als 7 Gew.-% an Copolyesterether andere Verarbeitungsprobleme entstehen, besonders beim Abschrecken der extrudierten Polyesterformmasse zu der amorphen Folie. Höhere Copolyesteretherzugaben können außerdem zu einer Trübung der Polyesterfolie führen, was unter kommerziellen Gesichtspunkten als in hohem Maße unerwünscht anzusehen ist.

Die erfindungsgemäß eingesetzten Copolyesterether werden von einer Dicarbonsäurekomponente abgeleitet, die im wesentlichen 1,4-Cyclohexandicarbonsäure oder eines ihrer esterbildenden Derivate, z. B. Dimethyl-1,4-cyclohexandicarbonsäureester darstellt. Sowohl die Säure als auch der Ester werden im Rahmen der vorliegenden Anmeldung teilweise als DMCD bezeichnet. Die Diolkomponente umfaßt im wesentlichen 1,4-Cyclohexandimethanol (CHDM) und Polytetramethylenetherglykol (PTMG). Ferner enthalten die Copolyesterether 0,1 bis 1,5 Mol-%, bezogen auf die Säure- oder Glykolkomponente, eines Verzweigungen hervorrufenden Monomeren mit mindestens drei funktionellen Carboxyl- oder Hydroxylgruppen.

Die zweibasische Säurekomponente des erfindungsgemäß eingesetzten Copolyesterethers umfaßt im wesentlichen DMCD mit einem Anteil an trans-Isomeren von mindestens 70%, bevorzugt mindestens 80%, und insbesondere mindestens 85%.

Die erfindungsgemäß eingesetzte Glykolkomponente umfaßt CHDM mit einem ebenfalls hohen Anteil an trans-Isomeren von beispielsweise mindestens 60%.

DMCD und CHDM sind bekannt und im Handel erhältlich. Ihre Herstellung ist auf Seite 85 von "Man-Made Fibers: Science and Technology", Bd. III, Hrsg. Mark, Atlas und Cernia, erschienen bei Interscience Publishers, beschrieben.

Auch die erfindungsgemäß verwendete Polytetramethylenetherglykolkomponente ist im Handel erhältlich und wird nach bekannten Verfahren hergestellt. Das für den erfindungsgemäßen Copolyesterether eingesetzte PTMG hat ein Molekulargewicht von etwa 500 bis 1 100 und wird in einer Menge zwischen 15 und 50 Gew.-%, bevorzugt zwischen 20 und 35 Gew.-%, bezogen auf das Gesamtgewicht des Copolyesterethers, verwendet.

Die erfindungsgemäß verwendeten Copolyesterether enthalten vorzugsweise noch 0,1 bis 1,5 Mol-%, bezogen auf die Säure- oder Glykolkomponente, einer polybasischen Säure oder eines polyvalenten Alkohols als Verzweigungen hervorrufendes Monomeres mit mindestens drei funktionellen Carboxyl- oder Hydroxylgruppen und 3 bis 60 C-Atomen.

Auch die Ester der Säuren oder Polyole können in vielen Fällen verwendet werden. Als Verzweigungen hervorrufende Monomere sind beispielsweise Trimellithsäure oder deren Anhydrid, Trimesinsäure, Trimethylolethan, Trimethylolpropan und andere dreibasige Säuren oder dreiwertige Alkohole geeignet.

Die Gesamtmenge der Säurekomponenten und die Gesamtmenge der Glykolkomponenten sollte jeweils 100 Mol-% betragen. Zwar soll die Säurekomponente im wesentlichen aus DMCD bestehen, doch wird zu ihr auch das Verzweigungen hervorrufende Monomere gezählt, wenn dieses eine polybasische Säure oder ein Säureanhydrid darstellt. Desgleichen besteht die Glykolkomponente zwar im wesentlichen aus CHDM und PTMG, doch wenn das Verzweigungen hervorrufende Monomere ein Polyol ist, wird es als Teil dieser Komponente mitgerechnet. Obwohl die Menge an PTMG der Einfachheit halber in Gew.-% angegeben ist, soll selbstverständlich die gesamte Menge von PTMG, CHDM und gegebenenfalls Polyol zusammengenommen 100 Glykol-Molprozent betragen.

Die erfindungsgemäß eingesetzten Copolyesterether können zusätzlich ein phenolisches Antioxidans enthalten, das zur Reaktion mit den Polymer-Zwischenprodukten befähigt ist. Dadurch wird das Antioxidans chemisch an den Copolyesterether gebunden, so daß es praktisch nicht mehr aus dem Copolymeren extrahiert werden kann. Erfindungsgemäß geeignete Antioxidantien sollen daher mindestens eine zur Reaktion mit den zur Herstellung des Copolyesterethers eingesetzten Reaktionsteilnehmern befähigte Säure-, Hydroxyl- oder Estergruppe besitzen. Bevorzugt wird als Antioxidans eine sterisch gehinderte und relativ unflüchtige Verbindung eingesetzt. Geeignete Antioxidantien sind beispielsweise Hydrochinon, Arylaminverbindungen wie 4,4'-Bis(α,α-dimethylbenzyl)diphenylamin, Phenolverbindungen wie 2,6-Di-tert-butyl-4-methylphenol, butyliertes p-Phenylphenol und 2-(α-Methylcyclohexyl)-4,6-dimethyl phenol, Bis-phenole wie 2,2'-Methylenbis(6-tert-butyl-4-methylphenol), 4,4'-Bis-(2,6-ditert-butylphenol), 4,4'-Methylen-bis(6-tert-butyl-2-methylphenol), 4,4'-Butylen-bis(6-tert-butyl-3-methylphenol), Methylen-bis-(2,6-di-tert-butylphenol), 4,4'-

3

Thio-bis-(6-tert-butyl-2-methylphenol) und 2,2´-Thio-bis(4-methyl-6-tert-butylphenol), Trisphenole wie 1,3,5-Tris-(3,5-di-tert-butyl-4-hydroxyhydrozimtsäure)-hexahydrotriazin, 1,3,5-Trimethyl-2,4,6-tris(3,5-di-tert-butyl-4-hydroxybenzyl)benzol und Tri-(3.5-di-tert-butyl-4-hydroxyphenyl)-phosphit sowie als bevorzugtes Antioxidans Tetrakis[methylen(3,5-di-tert-butyl-4-hydroxy-hydrozimtsäureester)methan], das unter der Bezeichnung ®IRGANOX, Hersteller Ciba Geigy, im Handel erhältlich ist. Im allgemeinen beträgt die eingesetzte Menge des Antioxidans 0,1 bis 1,0 Gew.-%, bezogen auf das Gewicht des Copolyesterethers.

Die erfindungsgemäß eingesetzten Copolyesterether. sind außerdem durch hohe Festigkeit ihrer Schmelzen gekennzeichnet. Der Ausdruck "Festigkeit der Schmelze" bedeutet, daß die jeweilige Polymerschmelze nach dem Extrudieren durch eine entsprechende Düse sich selbst trägt. Wenn solch ein Polymeres nach unten aus dem Extruder gepreßt wird, hält die Schmelze zusammen. Ohne Festigkeit der Schmelze würde die Schmelze reißen und herabtropfen. Um einheitliche Vergleichsmöglichkeiten zu -schaffen, wird die Festigkeit der Schmelze bei einer Temperatur gemessen, die 20 °C über dem Schmelztemperaturmaximum liegt.

Der Schmelzpunkt bzw. das Schmelztemperaturmaximum wird mit Hilfe eines DSC-2 Calorimeters der Perkin Elmer Company bei einer Aufheizgeschwindigkeit von 20 °C/min ermittelt.

Die Festigkeit der Schmelze wird gemessen, indem die Polymerenschmelze bei einem Geschwindigkeitsgefälle von 20 reziproken Sekunden durch eine Düse eines Durchmessers von 2,54 mm und einer Länge von 6,35 mm extrudiert wird. Von der Düsenaustrittsöffnung fällt das Extrudat im freien Fall unter normalen Schwerkraftsbedingungen nach unten. Es wird gemessen, welchen Durchmesser das Extrudat jeweils hat, wenn es ein 152 mm langes Stück seiner selbst trägt. Wenn der Extrudatdurchmesser weniger als 2,54 mm beträgt, ist der Quellfaktor negativ, da das Extrudat nicht gequollen ist. Wenn der Extrudatdurchmesser größer als 2,54 mm ist, ist der Quellfaktor positiv. Er wird in Prozent angegeben. Bei Verwendung einer Düse von 2,54 mm Durchmesser wird er nach der folgenden Formel berechnet:

$$\text{Quellfaktor (\%)} = \frac{\text{Durchmesser(mm) des Extrudats bei 152 mm Länge} - 2{,}54\ mm \cdot 100}{2{,}54\ mm}$$

Ein Quellfaktor von 0% bedeutet daher, daß keine Veränderung des Extrudatdurchmessers stattgefunden hat.

Die erfindungsgemäßen Copolyesterether haben einen Quellfaktor von größer als -90 % bis etwa +100 %. Bevorzugt be trägt der Quellfaktor -50 % bis +50 %. Er kann durch Erhöhen der Viskosität oder der Anzahl der Verzweigungen oder durch eine Kombination der beiden Maßnahmen erhöht werden.

Der Gehalt des endgültigen Copolyesterethers an trans- und cis-Isomeren wird gesteuert, um schnell kristallisierende Polymere zu erhalten. Er wird nach bekannten einschlägigen Verfahren bestimmt. Copolyesterether, die den erfindungsgemäß eingesetzten Copolyesterethern ähnlich sind, jedoch eine niedrigere Glasübergangstemperatur haben und nicht kristallisieren, werden klebrig und sind für die Herstellung praxisgerechter Produkte ungeeignet. Für langsam kristallisierende Copolyesterether sind lange Verarbeitungszeiten erforderlich. Daher ist es im Interesse einer möglichst kurzen Verarbeitungsdauer höchst wünschenswert, schnell kristallisierende Copolyesterether einzusetzen. Die Kristallisationsgeschwindigkeit von Copolyesterethern kann durch Ermitteln der Zeiten (tp) bestimmt werden, in denen jeweils bei verschiedenen Kristallisationstemperaturen die Spitzenwerte der exothermen Reaktionen während des Kristallisierens erreicht werden. Typischerweise gibt es eine Temperatur, bei der die Zeit tp geringer ist als bei allen anderen Temperaturen. Dieser Minimalwert von tp wird als $t_{min}$ bezeichnet und dient als Parameter zur Kennzeichnung der Kristallisationsgeschwindigkeit. Je kleiner der Wert von $t_{min}$ ist, desto schneller erfolgt die Kristallisation des jeweiligen Copolyesterethers. Werte von $t_{min}$ von unter 2,5 Minuten sind wünschenswert, wobei Werte von etwa 1 Minute bis zu weniger als 0,5 Minuten besonders bevorzugt werden.

Weitere Informationen über die Herstellung von erfindungsgemäß geeigneten Copolyesterethern sind in US-A-4 349 469 enthalten.

Die erfindungsgemäß geeigneten Polyesterformmassen werden durch Polykondensation von Dicarbonsäuren oder deren niederen Alkyldiester mit Glykolen erhalten. Zu den für die Herstellung der Polyesterformmassen geeigneten Dicarbonsäuren gehören Terephthal-, Isophthal-, Phthal-, 2,5-, 2,6- und 2,7-Naphthalindicarbon-, Bernstein-, Sebacin-, Adipin-, Azelain-, Dibenzoe- und Hexahydrophthalsäure sowie deren Alkyldiester und Bis-p-carboxy-phenoxyethan. Eine oder mehrere dieser Säuren und/oder ihrer niederen Alkylester wird/werden mit einem oder mehreren Glykol(en) wie z. B. Ethylenglykol, 1,3-Propandiol, 1,4-Butandiol, Neopentylglykol oder 1,4-Cyclohexandimethanol umgesetzt. Da ein oder mehrere Diester mit einem oder mehreren Glykol(en) umgesetzt werden kann/können, sind nicht nur Homopolyester, sondern auch Mischpolyester und/oder Copolyester erfindungsgemäß geeignet.

Unter den erfindungsgemäß in Frage kommenden filmbildenden Polyesterformmassen werden die überwiegend aus Polyethylenterephthalat bestehenden bevorzugt; besonders bevorzugt wird ein Polyethylenterephthalat-Homopolymeres, dessen Grenzviskosität, gemessen in Orthochlorphenol bei 25 °C, mehr als 0,3 dl/g, insbesondere 0,4 bis 1,0 dl/g, und besonders bevorzugt 0,5 bis 0,7 dl/g beträgt.

Das erfindungsgemäß eingesetzte Polyethylenterephthalat kann aus einem durch Polykondensation von Bis-(2-hydroxyethyl)-terephthalat erhaltenen Polymeren gebildet werden. Das Bis-(2-hydroxyethyl)-terephthalat wird als Zwischenprodukt nach einem der beiden folgenden Verfahren gewonnen. Das eine Verfahren besteht in einer direkten Veresterung von Terephthalsäure und Ethylenglykol gemäß US-A-3 050 533. Dabei entsteht als Nebenprodukt Wasser, das abdestilliert wird. Im zweiten Verfahren werden Terephthalsäuredialkylester, bevorzugt Dimethylterephthalat, mit Ethylenglykol umverestert. Bevorzugt werden dabei zwei Molteile Ethylenglykol mit einem Molteil Dialkylterephthalat umgesetzt.

Insbesondere sind pro Molteil Dialkylterephthalat mehr als zwei Molteile Ethylenglykol vorhanden, da unter diesen Bedingungen die Umesterungsreaktion schneller einsetzt und vollständiger abläuft. Die Umesterung wird bei erhöhten Temperaturen, die bevorzugt zwischen der Siedetemperatur des Reaktionsgemisches und 205 °C liegen, durchgeführt. Die Reaktion kann unter Normal-, Unter- oder Überdruck vonstatten gehen. Als Reaktionsnebenprodukt entsteht ein Alkohol, beispielsweise Methanol bei Einsatz von Dimethylterephtalat. Der Alkohol wird aus dem Reaktionsprodukt entfernt. Zur Beschleunigung der Reaktion kann eine Vielzahl bekannter Katalysatoren zugesetzt werden.

Das so nach einem der beiden obigen Verfahren erhaltene Bis-(hydroxyethyl)-terephthalat wird in das Polyethylen terephthalatpolymere umgewandelt, indem das Gemisch zur Entfernung des Wassers bzw. Ethylenglykols auf eine Temperatur oberhalb der Siedetemperatur von Ethylenglykol bzw. des Reaktionsgemisches erwärmt wird. Dabei kann die Temperatur bis zu 325 °C betragen. Um das gewünschte Polykondensat zu erhalten, muß während des Erwärmens oder mindestens während eines Teils der Erhitzungsdauer der Druck vermindert werden, um ein rasches Abdestillieren des überschüssigen Glykols bzw. Wassers zu gewährleisten. Die Druckabnahme kann schrittweise erfolgen, so daß zu Beginn der Erwärmung noch Normaldruck herrscht. Endgültige Unterdrucke zwischen 1 und 10 mm Quecksilbersäule werden bevorzugt.

Die für die Umesterungsreaktion verwendeten Katalysatoren können auch während der Polykondensation anwesend sein. Für die Polykondensation werden als Katalysatoren Antimonverbindungen wie Antimontrioxid, Antimonsäure und ähnliche Verbindungen bevorzugt. Diese Katalysatoren beschleunigen die Polykondensation von Bis-(2-hydroxyethyl)-terephthalat zu Polyethylen-terephthalat.

Die Erwärmung während der Polykondensationsreaktion erfolgt so, daß eine Oxidation verhindert wird. Um den Zutritt von Sauerstoff auszuschließen, kann ein inertes Gas, z. B. Stickstoff oder Kohlendioxid, über oder durch das geschmolzene Gemisch geblasen werden. Während der Erwärmung und der dabei stattfindenden Polykondensation nimmt die Viskosität der Schmelze langsam zu. Die Temperatur muß während der gesamten Reaktionsdauer so hoch ge halten werden, daß das Gemisch in geschmolzenem Zustand bleibt. Die Wärmebehandlung wird mindestens so lange fortgesetzt, bis aus der Schmelze ein Film mit den gewünschten Eigenschaften gebildet werden kann. Der Schmelzpunkt des polykondensierten Produkts ist vorzugsweise höher als 240 °C, insbesondere höher als 250 °C. Wenn die Wärmebehandlung abgeschlossen ist, kann das erhaltene Produkt direkt für die Folienherstellung weiterverwendet werden oder bis zur weiteren Verwendung in Form von Blöcken, Granulat oder dergleichen aufbewahrt werden.

In der Polyesterformmasse sind gegebenenfalls Partikel mit Durchmessern zwischen 0,2 und 30 µm, bevorzugt zwischen 0,2 und 8 µm, enthalten. Diese Partikel dienen üblicherweise als Zusätze für Polyesterformmassen, die zur Herstellung von biaxial orientierten Folien bestimmt sind, um die Abriebfestigkeit der fertigen Folie zu verbessern und ihren Reibungskoeffizienten zu senken. Aus US-A-3 669 931 geht beispielsweise hervor, daß durch den Einschluß von Kaolinpartikeln die Langzeitabriebfestigkeit von Polyesterfolien verbessert werden kann. Nach US-A-3 821 156 können sowohl die langzeitigen als auch die kurzzeitig bedingten Abriebeigenschaften von Polyethylenterephthalatfolien durch Calciumcarbonatpartikel und einen inerten Füllstoff wie Kieselsäure, Talkum oder Kaolin verbessert werden. In US-A-3 884 870 - schließlich wird beschrieben, daß der Reibungskoeffizient von biaxial orientierter Polyethylenterephthalatfolie durch Hinzufügen von inerten Partikeln mit bimodaler Größenverteilung verringert werden kann, ohne daß dadurch die Transparenz der Folie beeinträchtigt wird. Im einzelnen schlägt das Patent eine Polyethylenterephthalatfolie vor, die einen Gehalt von 0,3 bis 2,5 Gew.-% eines inerten kleinteiligen Zusatzstoffes mit durchschnittlichen Teilchengrößen von 10 bis 1000 nm und von 0,002 bis 0,018 Gew.-% eines größerteiligen inerten Zusatzstoffes mit durchschnittlichen Teilchengrößen von 0,5 bis 30 µm aufweist.

Vor der Extrusion sollten der Polyester und der Copolyesterether getrocknet werden. Der Polyester sollte nach dem Trocknen einen Feuchtigkeitsgehalt von maximal 0,01 %, bevorzugt maximal 0,005 %, aufweisen. Der Copolyesterether sollte nach dem Trocknen einen Feuchtigkeitsgehalt von maximal 0,05 %, bevorzugt maximal 0,02 %, besitzen. Das Copolyesterether-Granulat wird vorteilhafterweise in einem mit einem Trockenluftgebläse gekoppelten Trichtertrockner bei einer Temperatur von 160 °C und einem Durchsatz von 0,06 m³/min/kg Granulat innerhalb von 3 Stunden getrocknet.

Vor der Extrusion können die trockenen Polyester- und Copolyesterether-Granulate miteinander vermischt werden. Anschließend werden sie in den Extruder gegeben, wo die Granulate geschmolzen und der Copolyesterether gleichmäßig mit dem Polyester vermengt wird. Das Schmelzegemisch kann dann strangförmig extrudiert, abgeschreckt, granuliert und bis zur weiteren Verwendung gelagert oder direkt zu einer Folie verarbeitet werden.

Extrusions-, Orientierungs- und Kristallisationsverfahren zur Herstellung von Polyesterfolien sind bekannt. Der getrocknete Polyester wird beispielsweise aufgeschmolzen und durch eine Breitschlitzdüse auf eine polierte rotierende Kühltrommel zu einer Vorfolie extrudiert. Das Extrudat wird im allgemeinen mit Druckluft oder mittels elektrostatischer Aufladung an die polierte Oberfläche der Kühltrommel angelegt. Das elektrostatische Anlegen wird generell bevorzugt, da Druckluft oft zu Lärmbelästigung und unerwünschten Verschmutzungen durch Öl führt. Anschließend wird die Folie axial gestreckt, und zwar bei einer monoaxial orientierten Folie lediglich in einer Richtung, d. h. entweder in Extrusionsrichtung (längs) oder senkrecht zur Extrusionsrichtung (quer), und bei einer biaxial orientierten Folie in zwei Richtungen, d. h. sowohl in Längs- als auch in Querrichtung. Der erste an der gegossenen Folie durchgeführte Streckschritt kann beliebig in einer der beiden rechtwinklig zueinander verlaufenden Richtungen erfolgen. Um der Folie Festigkeit und Zähigkeit zu verleihen, kann etwa um das 3,0- bis 5,0fache der ursprünglichen Abmessungen der gegossenen Folie in einer oder beiden Richtungen gestreckt werden. Der Verstreckungsgrad liegt vorzugsweise etwa zwischen dem 3,2- bis 4,2fachen der ursprünglichen Abmessungen.

Während der Streckschritte liegen die Temperaturen im Bereich zwischen der Glasübergangstemperatur des jeweils eingesetzten Polymeren bis unterhalb der Temperatur, bei der das Polymere weich wird und schmilzt. Für Polyethylenterephthalatfolien betragen die Strecktemperaturen etwa 80 bis 100 °C.

Nach dem Strecken wird für die zur Kristallisation oder Wärmefixierung der Folie erforderliche Dauer wärmebehandelt. Durch die Kristallisation werden die mechanischen Eigenschaften und die Dimensionsstabilität der Folie fixiert. Polyethylenterephthalat wird z. B. bei einer Temperatur im Bereich von etwa 190 °C bis 240 °C, vorzugsweise von etwa 215 °C bis 235 °C, wärmebehandelt.

Die erfindunsgemäße Polyesterformmasse kann auch bei der Herstellung coextrudierter Polyesterfolien eingesetzt werden. Auch die Herstellung coextrudierter Folien ist bekannt und unterscheidet sich von der Herstellung einschichtiger Folien im wesentlichen durch die Verwendung spezieller Coextrusionsdüsen. Solche Düsen sind z. B. in US-A-3 476 627, US-A-3 833 704 und US-A-4 443 397 beschrieben. Mit Hilfe dieser Düsen können Mehrschichtfolien wie Zweischichtfolien (AB-Aufbau) oder Dreischichtfolien (ABA-Aufbau) hergestellt werden.

Die Erfindung wird anhand der folgenden Beispiele näher erläutert, ohne daß jedoch eine Einschränkung auf diese Beispiele stattfinden soll.

Beispiel 1

Polyethylenterephthalat-Granulat, dessen Grenzviskosität etwa 0,62 dl/g betrug und das Calciumcarbonatpartikel sowie einen inerten Zusatz gemäß Beispiel 1 der US-A-3 821 156 enthielt, wurde mittels Luft, deren Taupunkt bei -50 °C lag, bei 160 °C sechs Stunden getrocknet. Das getrocknete Granulat wurde anschließend ge schmolzen und durch eine verstellbare Breitschlitzdüse zu einem flächigen Gebilde extrudiert. Die Polyesterschmelze wurde nach dem Extrudieren auf einer rotierenden Kühltrommel mit einer hochglanzpolierten Stahloberfläche rasch abgekühlt ("abgeschreckt"). Die Temperatur der Kühltrommel wurde auf etwa 20 °C gehalten. Der ganzflächige Kühleffekt durch die Kühltrommel wurde durch elektrostatisches Anlegen der Folie gewährleistet.

Die so erhaltene Vorfolie wurde anschließend zunächst in Längsrichtung (Maschinenrichtung) und dann in Querrichtung zu einer biaxial orientierten Polyesterfolie verstreckt und danach bei einer Temperatur von 225 °C während 3,5 Sekunden hitzefixiert. Die erhaltene Folie hatte eine Dicke von 12 μm und wurde auf einen Wickelkern gewickelt.

Beispiel 2

Granulat eines Copolymeren aus 100 Mol-% 1,4-Cyclohexandicarbonsäure mit einem Gehalt an trans-Isomeren von mindestens 70 Mol-%, 91 Mol-% 1,4-Cyclohexandimethanol und 9 Mol-% Polytetramethylenetherglykol eines durchschnittlichen Molekulargewichts von1 000, erhältlich unter der Kurzbezeichnung ®PCCE bei dem Hersteller Eastman Chemical Products Inc., wurde in einem Umluftofen ohne Trockenmittel sechs Stunden bei 130 °C getrocknet. Eine abgemessene Menge des getrockneten Copolyesterethergranulats wurde beim Einfüllen des in Beispiel 1 beschriebenen Polyethylenterephthalatgranulats in den Extruder jeweils kontinuierlich zudosiert. Nach den Angaben von Beispiel 1 wurden mehrere biaxial orientierte Polyesterfolien hergestellt, die sich dadurch voneinander unterschieden, daß dem Polyester vor der Extrusion jeweils eine andere Menge Copolyesterether beigemengt wurde.

Im ersten Versuch betrug der Anteil an ®PCCE 10 % der Gesamtschmelze. Die Qualität der austretenden Folie war jedoch minderwertig, sie wies dünne, transparente und dickere weißliche Flächenbereiche auf. Wird die Kühltrommel entfernt, erhält man ein gleichmäßiges opakes Extrudat. Eine Reduzierung der Anlegspannung führte zum gleichen Ergebnis, doch wurden dadurch weitere Merkmale der Folienqualität stark beeinträchtigt. Es wird angenommen, daß die Schmelze bei einem ®PCCE-Gehalt von 10 % eine zu große Leitfähigkeit besitzt und daß sie daher für das Anlegen an die Kühltrommel mittels elektrostatischer Aufladung schlecht geeignet ist.

Die ®PCCE-Konzentration wurde daher im nächsten Versuch auf 1,25 % reduziert. Außerdem wurden Folien mit einem ®PCCE-Gehalt von 2,5 % und 5 % hergestellt. Bei einem ®PCCE-Gehalt von 7 % war die Folienqualität erneut so schlecht wie beim ersten Versuch.

Beispiele 3-5

Drei weitere, jeweils 12 µm dicke Polyethylenterephthalatfolien mit Copolyesteretherzusatz wurden nach den Angaben von Beispiel 2 hergestellt. In jedem Fall wurde zum Vergleich eine 12 µm dicke Folie aus 100 % Polyethylenterephthalat hergestellt. Die Ergebnisse dieser Versuche sind in der nachfolgenden Tabelle zusammengestellt.

Beispiel 6

Eine zweischichtige Polyesterfolie wurde im Coextrusionsverfahren hergestellt. Sie bestand aus einer 2 µm dicken Schicht aus einem Terephthalat-Isophthalat-Copolyester (PETIP) und einer 10 µm dicken Schicht aus dem füllstoffhaltigen Polyethylenterephthalathomopolymer von Beispiel 1. Die Säurekomponente des PETIP-Copolyesters bestand aus 18 Mol-% Isophthalsäure und 82 Mol-% Terephthalsäure.

Die beiden Polymere wurden getrennt geschmolzen, durch eine Spezialdüse zu einer AB-Vorfolie extrudiert und sofort auf einer Kühltrommel abgeschreckt, die eine Temperatur von etwa 20 °C hatte. Durch elektrostatisches Anlegen der extrudierten Schmelze an die Oberfläche der Kühltrommel wurde ein einwandfreies Abschrecken der Schmelze erreicht.

Die so erhaltene coextrudierte Polyesterfolie wurde anschließend zunächst in Längsrichtung (Maschinenrichtung) und dann in Querrichtung zu einer biaxial orientierten coextrudierten Folie verstreckt. Danach wurde sie bei einer Temperatur von 230 °C während 3,5 Sekunden hitzefixiert. Die erhaltene Folie wurde auf einen Wickelkern gewickelt.

Im Lauf von acht Stunden wurden sieben Folienabrisse registriert, wobei Musterwickel einer Länge von 2 000 m bis 8 000 m, bei einer Durchschnittslänge von 4 000 m, erhalten wurden. Nach dieser Zeitspanne wurden der PETIP- Schicht und der PET-Schicht jeweils 2,5 % ®PCCE zugesetzt. Nach einer Anlaufzeit von zwei Stunden lief die Anlage acht Stunden abrißfrei.

Darauf wurde der Terephthalat/Isophthalat-Schmelze kein ®PCCE mehr zugesetzt, d. h. nur die PET-Schicht enthielt noch 2,5 % des Copolyesterethers. Die Anlage produzierte diese Folie 20 Stunden lang mit nur einem Folienabriß, dessen Ursache unbekannt blieb.

Zusammenfassende Darstellung der Folienabrisse:

In Tabelle 1 ist der Zeitabstand zwischen den Abrissen für die einzelnen Folien angegeben. Für die ersten vier Probengruppen sind Durchschnittswerte angegeben. Bei der vierten und fünften Probengruppe betrug die Laufzeit 96 bzw. 108 Stunden ohne einen einzigen Folienabriß. Die Abnahme der Abrisse im Streckrahmen wird am besten durch die Beispiele 6(C) und 6(A) verdeutlicht, die identisch sind bis auf die Zugabe von 2,5 % ®PCCE zur 10 µm dicken PET-Schicht in Beispiel 6(C). Die Folie gemäß Beispiel 6(A) reißt durchschnittlich alle 1,1 Stunden, während die Folie nach Beispiel 6(C) im Durchschnitt nur einmal in 20 Stunden reißt.

Das Auftreten von Abrissen im Streckrahmen wird oft auf eine ganze Reihe von Verfahrensbedingungen und Materialeigenschaften des Polyesters zurückgeführt. Manche Streckrahmen führen offenbar zu weniger Abrissen und reagieren weniger sensibel auf Schwankungen der Verfahrensparameter als andere. Außerdem nimmt die Abrißhäufigkeit mit abnehmender Folienstärke zu. Daher hatten alle beschriebenen Versuchsfolien eine einheitliche Dicke von 12 μm und wurden auf demselben Streckrahmen gereckt.

Tabelle 1

| Beispiel | Folienzusammensetzung | Durchschnittliche Zeit zwischen Abrissen / |
|---|---|---|
| 6(A) | PETIP/PET-Coextrusion (Control) | 1.1 Stunde |
| 6(C) | PETUP/PET mit 2.5 % PCCE (Coextrusion) | 20 Stunden |
| 1, 4(A) | PET (Control) | 24 Stunden |
| 3(D), 3(E) 4(B), 4(C) | PET mit 1.5 - 2.0 % PCCE | 48 Stunden |
| 6(B) | PETIP mit 2.5 % PCCE/PET mit 2.5 % PCCE (Coextrusion) | 8 Stunden ohne Abrisse |
| 3(B), 3(C) 2(B) | PET mit 2.5 - 5.0 % PCCE | >96 Stunden ohne Abrisse |
| 5(B) | PET mit 2.5 % PCCE | >108 Stunden ohne Abrisse |

Biegebruchfestigkeit

Ein weiterer Vorteil der erfindungsgemäßen Polyesterformmasse besteht darin, daß die aus ihr hergestellten biaxial orientierten Folien eine höhere Biegebruchfestigkeit aufweisen als Folien ohne den erfindungsgemäßen Zusatz. Diese Eigenschaft ist besonders für Verpackungsfolien von großer Bedeutung.

Die Biegebruchfestigkeit einiger der 12 μm dicken Folien nach den Beispielen 1 bis 6 wurde durch Versuche mit 20 x 30 cm großen Proben mit einem Gelbo-Flex-Gerät ermittelt. Jede Prüfung umfaßte 1 000 Zyklen. Anschließend wurde die Anzahl der winzigen Defekte, die auf der etwa 175 cm$^2$ großen Innenfläche der Proben entstanden sind, ermittelt. Dazu wurde die Probe nach dem Biegeversuch beispielsweise rot oder schwarz eingefärbt und gegen einen weißen Hintergrund gehalten, um so die Defekte sichtbar zu machen. Die Ergebnisse dieser Prüfung sind in Tabelle 2 dargestellt.

Tabelle 2

| Folienbeispiel | Folienzusammensetzung | Anzahl der winzigen Defekte bei 1000 Zyklen |
|---|---|---|
| Beispiel 1 | 100 % PET (control) | 18.0 |
| Beispiel 2(A) | 2.25 % PCCE | 8.4 |
| Beispiel 2(B) | 5.0 % PCCE | 7.2 |
| Beispiel 3(A) | 100 % PET (control) | 15.3 |
| Beispiel 3(B) | 2.5 % PCCE | 6.5 |
| Beispiel 3(C) | 5.0 % PCCE | 6.7 |
| Beispiel 3(D) | 1.5 % PCCE | 10.7 |
| Beispiel 3(E) | 2.0 % PCCE | 9.3 |
| Beispiel 4(A) | 100 % PET (control) | 18.0 |
| Beispiel 4(B) | 1.75 % PCCE | 9.8 |
| Beispiel 4(C) | 2.0 % PCCE | 8.5 |
| Beispiel 5(A) | 100 % PET (control) | 14.0 |
| Beispiel 5(B) | 2.5 % PCCE | 3.8 |
| Beispiel 6 (A/B coextrudierte Folien) | | |
| (A) | PETIP/PET (control) | 32 |
| (B) | PETIP mit 2.5 % PCCE/PET mit 2.5 % PCCE | 13 |
| (C) | PETIP/PET mit 2.5 % PCCE | 18 |

Beispiel 2 wurde unmittelbar nach Beispiel 1 mit demselben Polyesterrohstoff durchgeführt. Für die Beispiele 3 bis 6 wurde jeweils ein neuer Polyesterrohstoff verwendet. Abweichungen bei der Ermittlung der Anzahl der "Minidefekte" bei den verschiedenen Kontrollproben sind auf Abweichungen der anfänglichen Molekulargewichte und/oder der Endmolekulargewichte aufgrund der nicht immer vollständigen Trocknung der Polymeren zurückzuführen.

## Ansprüche

1. Thermoplastische Polyesterformmasse mit verbesserten Verarbeitungseigenschaften, dadurch gekennzeichnet, daß sie neben einem Polyester einen Copolyesterether enthält, wobei der Copolyesterether wenigstens die folgenden Komponenten enthält:

A) als Dicarbonsäurekomponente eine 1,4-Cyclohexandicarbonsäure mit einem Anteil an trans-Isomeren von wenigstens 70%;

B) als Glykolkomponente

i) 1,4-Cyclohexandimethanol und

ii) Polytetramethylenetherglykol mit einem mittleren Molekulargewicht im Bereich von 500 bis 1 100 in einer Menge von 15 bis 50 Gew.-%, bezogen auf das Gesamtgewicht des Copolyesterethers;

C) als zusätzliche Komponente ein Verzweigungen hervorrufendes Monomeres mit mindestens drei funktionellen Carboxyl- oder Hydroxylgruppen und mit einer Anzahl von Kohlenstoffatomen im Bereich von 3 bis 60 in einer Menge von 0,1 bis 1,5 Mol-%, bezogen auf die gesamte Molmenge der Dicarbonsäurekomponente oder der Glykolkomponente.

2. Polyesterformmasse nach Anspruch 1, dadurch gekennzeichnet, daß der Copolyesterether innerhalb der Polyestermischung in einer Menge anwesend ist, die ausreicht, um bei der Herstellung von biaxial streckorientierten Folien aus der Polyestermischung die Häufigkeit von Folienabrissen wirkungsvoll zu reduzieren, bevorzugt in einer Menge von nicht mehr als 7 Gew.-%, bezogen auf das Gesamtgewicht der Polyesterformmasse.

3. Polyesterformmasse nach Anspruch 1 oder 2, dadurch gekennzeichnet, daß die 1,4-Cyclohexandicarbonsäure einen Anteil an trans-Isomeren von mindestens 80 %, bevorzugt mindestens 85 %, aufweist und daß das 1,4-Cyclohexandimethanol einen Anteil an trans-Isomerem von wenigstens 60 % aufweist.

4. Polyesterformmasse nach einem der Ansprüche 1 bis 3, dadurch gekennzeichnet, daß das Polytetramethylenetherglykol in einer Menge von 20 bis 35 Gew.-% vorliegt, bezogen auf das Gesamtgewicht an Copolyesterether, und daß es ein mittleres Molekulargewicht im Bereich von 500 bis 1 000 besitzt.

5. Polyesterformmasse nach einem der Ansprüche 1 bis 4, dadurch gekennzeichnet, daß das Verzweigungen hervorrufende Monomere Trimellithsäureanhydrid ist.

6. Polyesterformmasse nach einem der Ansprüche 1 bis 5, dadurch gekennzeichnet, daß der Copolyesterether in einer Menge im Bereich von 2,5 bis 5 Gew.-%, bezogen auf das Gesamtgewicht der Polyesterformmasse, vorliegt und daß zusätzlich ein Oxidationsstabilisator in einer Menge von 0,1 bis 1,0 Gew.-%, bezogen auf das Gesamtgewicht der Polyesterformmasse, in der Mischung vorhanden ist.

7. Polyesterformmasse nach einem der Ansprüche 1 bis 6, dadurch gekennzeichnet, daß der Polyester ein Polykondensationsprodukt ist aus einer zweibasigen organischen Säure und einem zweiwertigen Alkohol, bevorzugt aus einer zweibasigen aromatischen Säure und einem aliphatischen Glykol mit I bis 6 C-Atomen.

8. Polyesterformmasse nach einem der Ansprüche 1 bis 7, dadurch gekennzeichnet, daß der Polyester eine Mischung verschiedener Polyester oder ein Copolyester ist, enthaltend als Hauptbestandteil Polyethylenterephthalat.

9. Polyesterformmasse nach einem der Ansprüche 1 bis 8, dadurch gekennzeichnet, daß die Mischung zusätzlich ein weiteres teilchenförmiges Material enthält mit einer mittleren Teilchengröße im Bereich von 0,2 bis 30 μm in einer Menge im Bereich von 0,01 bis 3,0 Gew.-%, bezogen auf das Gesamtgewicht der Mischung.

10. Polyesterformmasse nach Anspruch 9, dadurch gekennzeichnet, daß die Teilchen in einer Menge von 0,3 bis 2,5 Gew.-%, bezogen auf das Gesamtgewicht der Mischung, einen mittleren Teilchendurchmesser von 10 bis 1 000 nm besitzen und in einer Menge von 0,002 bis 0,015 Gew.-%, bezogen auf das Gesamtgewicht der Mischung, einen mittleren Teilchendurchmesser von 0,5 bis 30 μm aufweisen

11. Biaxial streckorientierte Folie, hergestellt aus einer Polyesterformmasse nach einem der Ansprüche 1 bis 10.

12. Coextrudierte biaxial streckorientierte Mehrschichtfolie, dadurch gekennzeichnet, daß wenigstens eine Schicht eine Polyesterformmasse nach einem der Ansprüche 1 bis 10 enthält.

13. Folie nach Anspruch 11 oder 12, dadurch gekennzeichnet, daß sie zusätzlich hitzefixiert ist.